# EUROPEAN PATENT APPLICATION

(11) **EP 1 898 303 A1**
(43) Date of publication of application: **12.03.2008**
(21) Application number: 07114559.3
(22) Date of filing: 17.08.2007
(51) Int. Cl.: G06F 9/44

(54) **Apparatus and method for making build-block component**

(30) Priority: 22.08.2006 KR 20060079482
(71) Applicant: Samsung Electronics Co., Ltd., Yeongtong-gu Suwon-city, Gyeonggi-do 442-742 (KR)
(72) Inventor: Lim, Yong-Hun, Gyeonggi-do (KR); Park, Chong-Mok, Seoul (KR); Min, Kyung-Sub, Seoul (KR); Choi, Yoon-Hee, Gyeonggi-do (KR)
(74) Representative: Robinson, Ian Michael

(57) **Abstract**

An apparatus and method for generating build-block components, the apparatus including: a removal unit (220) to remove one or more depending relationships between components; an implementation unit (250) to generate one or more independent components from the components in which the one or more depending relationships have been dissolved; and a type definition unit (260) to define a type indicating characteristics for each the one or more generated independent components.

## Description

### BACKGROUND OF THE INVENTION

### 1. Field of the Invention

Aspects of the present invention relate to an apparatus and method for making build-block components, and more particularly, to an apparatus and method for making build-block components of so that a user can select a desired component.

### 2. Description of the Related Art

Rapid advancements made in the hardware industry have allowed manufacturers to make high-end devices with various functions within reduced time, and have reduced the technical gap between manufacturers. However, much time and cost are needed for the development of software required to operate these devices. As a result, the software may determine the success or failure of a product. However, even for a manufacturer that has the capability to develop software suitable to operate high-end hardware, it is difficult to develop corresponding software for each hardware item whenever the hardware item is developed. This is because the variety of hardware items is increasing and the development period of hardware is decreasing. Therefore, the reuse of source codes of legacy software that has already been developed at great time and cost must be considered. In order to reuse the legacy software that has already been developed, each module of the legacy software should be configured as a component.

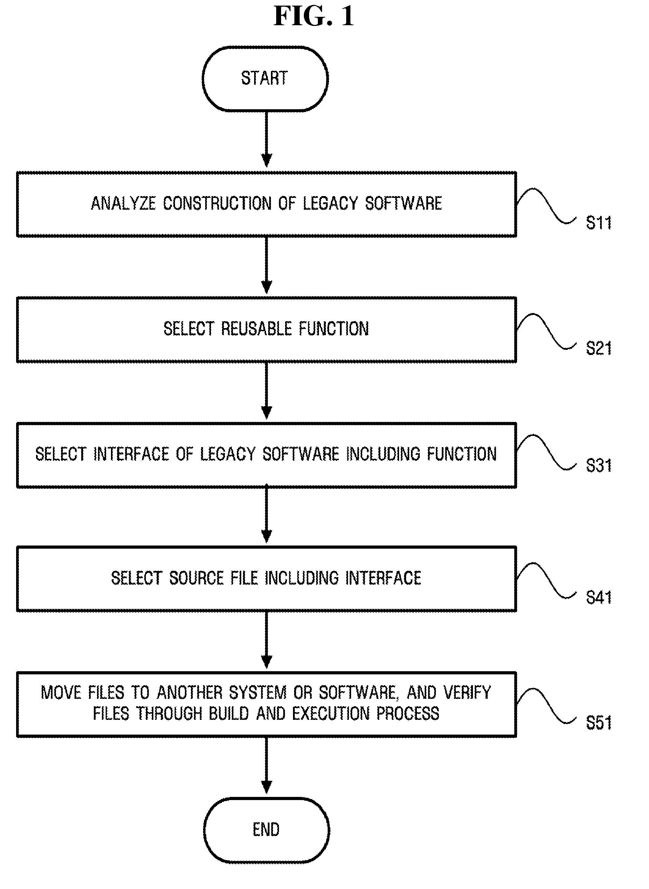

FIG. 1 is a flowchart illustrating a process for reusing source codes of conventional legacy software. First, a developer analyzes a configuration of legacy software to reuse functions of the legacy software (operation S11). Then, the developer selects a function to be reused in other systems or programs from among the functions implemented within the legacy software (operation S21). Next, the developer selects an interface of the legacy software including the selected function in order to call the selected function to be reused (operation S31). Further, the developer selects a source file including the interface (operation S41). Next, the developer moves the source file to other systems or programs, and verifies through a build and execution process that the moved source files operate without error in the new environment (operation S51). If an error occurs, debugging is repeatedly performed in the build and execution process until the error is resolved.

According to the process for reusing source codes of conventional legacy software described with reference to FIG. 1, the reused source files of a specific function are usually grouped to generate components corresponding to functions. However, there still remains a necessity to select a directory including the source files as an independent component so as to further expand the use of the component. Furthermore, it is necessary to define types of multiple generated build-block components so that a user can easily select the component and use the selected component as a module carrying out a specific function in a system.

### SUMMARY OF THE INVENTION

Accordingly, aspects of the present invention provide an apparatus and method for making build-block components to solve the above-mentioned problems occurring in the prior art.

Additional aspects and/or advantages of the invention will be set forth in part in the description which follows and, in part, will be obvious from the description, or may be learned by practice of the invention.

According to the present invention there is provided an apparatus and method as set forth in the appended claims. Other features of the invention will be apparent from the dependent claims, and the description which follows.

According to an aspect of the present invention, there is provided an apparatus for generating build-block components that are independent components of a program executable to operate one or more hardware items, the apparatus including: a removal unit to remove one or more depending relationships between components so as to enable each of the components to be used independently of another when executing the program; an implementation unit to generate one or more independent components from the components in which the one or more depending relationships have been removed; and a type definition unit to define a type indicating characteristics for the one or more generated independent components to enable a user to identify the one or more generated independent components.

According to another aspect of the present invention, there is provided a method of generating build-block components that are independent components of a program executable to operate one or more hardware items, the method including: removing one or more depending relationships between components so as to enable each of the components to be used independently of another when executing the program; generating one or more independent components from the components in which the one or more depending relationships have been removed; and defining a type indicating characteristics for the one or more generated independent components to enable a user to identify the one or more generated independent components.

According to another aspect of the present invention, there is provided an apparatus for generating build-block components that are independent components of a program executable to operate one or more hardware items, the apparatus including: a removal unit to remove one or more depending relationships between components so as to enable each of the components to be used independently of another when executing the program; and an implementation unit to generate one or more independent components from the components in which the one or more depending relationships have been removed.

According to another aspect of the present invention, there is provided an apparatus for distinguishing build-block components that are independent components of a program executable to operate one or more hardware items, the apparatus including: an implementation unit to generate one or more independent components; and a type definition unit to define a type indicating characteristic for the one or more generated independent components to enable a user to identify the one or more generated independent components.

According to another aspect of the present invention, there is provided a method of generating build-block components that are independent components of a program executable to operate one or more hardware items, the method including: removing one or more depending relationships between components so as to enable each of the components to be used independently of another when executing the program; and generating one or more independent components from the components in which the one or more depending relationships have been removed.

In addition to the example embodiments and aspects as described above, further aspects and embodiments will be apparent by reference to the drawings and by study of the following descriptions.

### BRIEF DESCRIPTION OF THE DRAWINGS

A better understanding of the present invention will become apparent from the following detailed description of example embodiments and the claims when read in connection with the accompanying drawings, all forming a part of the disclosure of this invention. While the following written and illustrated disclosure focuses on disclosing example embodiments of the invention, it should be clearly understood that the same is by way of illustration and example only and that the invention is not limited thereto. The spirit and scope of the present invention are limited only by the terms of the appended claims. The following represents brief descriptions of the drawings, wherein:
FIG. 1 is a flowchart illustrating a process for reusing source codes of conventional legacy software;
FIG. 2 is a block diagram showing an apparatus for making components of build-block according to an example embodiment of the present invention;
FIG. 3 is a flowchart illustrating a process for making independent components according to an example embodiment of the present invention;
FIG. 4 is a conceptual view illustrating a selection of a directory in order to make an independent component in a source tree according to an example embodiment of the present invention;
FIGs. 5 and 6 are views showing scripts in the source tree and information in execution of the scripts, according to an example embodiment of the present invention;
FIG. 7 is a view showing a build interface according to an example embodiment of the present invention;
FIG. 8 is a view showing a setting interface according to an example embodiment of the present invention; and
FIGS. 9 and 10 are views showing an independent component, the type of which is defined, and screens used for selecting the component, according to an example embodiment of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

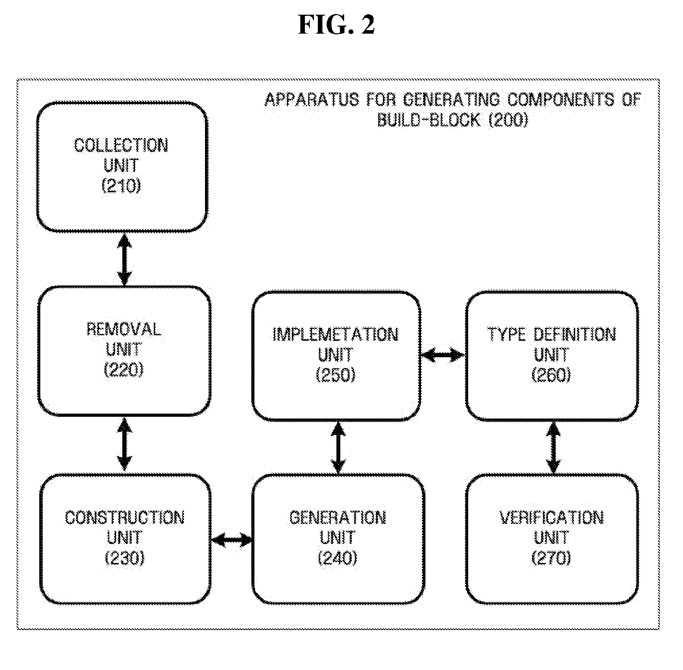

Hereinafter, an example embodiment of the present invention will be described in detail with reference to the accompanying drawings. FIG. 2 is a block diagram showing an apparatus for making build-block components according to an example embodiment of the present invention. The apparatus 200 for making build-block components includes a collection unit 210, a removal unit 220, a construction unit 230, a generation unit 240, an implementation unit 250, a type definition unit 260, and a verification unit 270.

A user selects one or more directories from a source tree to make build-block components (hereinafter, referred to as independent components). The build-block refers to a block in which the components do not depend on each other and can be independently made. The user can select an individual directory or a group of directories from the source tree in order to make the independent components.

The collection unit 210 collects information on the depending relationships between the components. Specifically, after one or more directories are selected in order to make the individual components, the collection unit 210 analyzes if there are depending relationships between the selected directories, and thereby collects information on the depending relationships between the components. For example, a directory A is selected to make a first component, and a directory B is selected to make a second component. If a source file in directory A refers to a source file in directory B, the directory A has a depending relationship with the directory B. Therefore, there exists a depending relationship between the first component to which the directory A belongs and the second component to which the directory B belongs.

Information on the depending relationships may be collected by static and/or dynamic methods. First, in the static method, the collection unit 210 can analyze a script (for example, makefile in GNU) in the source tree, and in turn collect the required information on the depending relationship. The collection unit 210 can identify information on an interface, a library necessary for linking, a source file required for compiling, etc. by analyzing grammar and shell instructions described in the script, and thereby collect information on a depending relationship between the directories.

In contrast, in the dynamic method, the collection unit 210 can analyze a parameter value of the shell instruction to be transmitted to a compiler or a linker when a script is executed, and collect information on a depending relationship between directories. The parameter value of the shell instruction may include a compile option, a name of a source file to be compiled, a link option, etc. For example, the collection unit 210 may change a name of a GNU Compiler Collection (GCC) compiler among the shell instructions in the script into another name (i.e. GXX) and copy the compiler. In addition, when the script is executed and the GCC compiler is called, the collection unit 210 executes a program with an identical name, GCC, which is generated in advance. At this time, the GCC program with an identical name receives and analyzes information to be transmitted to the GCC compiler (i.e. parameter values of the shell instruction) in advance. Similarly, the collection unit 210 analyzes information to be transmitted to the linker in the above-mentioned manner. Accordingly, the collection unit 210 can collect information on the depending relationship between the source files.

The removal unit 220 removes the depending relationship when there is a depending relation between the components. For example, two source files are included in a separate directory used for generating independent components (first component and second component). At this time, where the two source files have a depending relationship, the first and second components cannot be independently used. Therefore, in order to remove the depending relationship, the removal unit 220 can merge the components depending on each other, and thereby generate a new independent component. Alternatively, the removal unit 220 can copy the second component depending on the first component into the first component so that the second component is included in the first component, thereby removing the depending relationship. Thus, one independent component can be made through the above-mentioned processes.

The construction unit 230 provides a build method to make independent components based on information in a script of the source tree, and includes an interface to set one or more properties that are applied to the independent components. The interface can be classified into a build interface and a configuration interface, and displayed on a screen of a display device in a form of a graphical user interface (GUI).

The build interface provides build methods including all, install, clean, etc. For example, in a standard for GNU coding, all builds all targets (i.e. source files), and install installs all targets. Further, clean is a build method for removing intermediate results and all targets. In addition, the interface may indicate a depending relationship among the build methods, and provide setting menus to allow a user to select one of the build methods. That is, the construction unit 230 additionally provides the setting menus for the build methods with an option to remove the depending relationships between the components. Therefore, when the user selects a corresponding option, the construction unit 230 removes the depending relationship between the components through the removal unit 220, and builds the components in which the depending relationships have been removed.

The configuration interface provides properties applicable to the independent components. For example, the user may enable or disable a debugging function through the configuration interface. Furthermore, where a component to be made by build-block is a component relating to an audio function, the user may set whether the component supports MP3, or set an encoding or decoding manner through the configuration interface. The user sets the build interface and the configuration interface to a desired value. If the user does not set the build interface and the configuration interface, a default value may be selected.

The generation unit 240 generates a build script for generating independent components using the value set in the interface (such as the selected build method). Scripts in the source tree can be distributed throughout different directories. As a result, the distributed scripts may include duplicate information so that the user consistently has difficulty in changing the information of the distributed scripts. Therefore, the generation unit 240 generates a build script using the set values (i.e., values set through the build interface and/or the configuration interface) so as to consistently reflect the changes by the user in one script. The build script may be generated to correspond to only one independent component.

The implementation unit 250 generates the component in which the depending relationship is removed as one independent component. To generate the component, the implementation unit 250 executes the build script generated by the generation unit 240. When an option is selected to remove the depending relationships between the components in a setting menu of the build method, it is possible to generate independent components in which the removal unit 220 removes the depending relationships between the components.

The type definition unit 260 defines a type of the generated independent components. The type can include or indicate information on the characteristics and functions of the independent components. Where a plurality of independent components is generated, the user can distinguish the independent components according to the defined types, and more easily select an independent component to be used as a module carrying out a desired function in a system.

The verification unit 270 verifies whether the independent component is normally generated after the depending relationships are removed. Specifically, the verification unit 270 can verify whether the components remove the depending relationship therebetween and operate as one independent component. Furthermore, with the source files A and B belonging to an identical independent component, for example, the verification unit 270 verifies whether a function is normally defined in the source file B where the source file A imports a desired function of the source file B.

The structural elements and units shown in FIG. 2 may be kinds of modules, respectively. The term module, as used herein, refers to software or a structural hardware element, such as a Field Programmable Gate Array (FPGA) or an Application Specific Integrated Circuit (ASIC), that perform certain functions. However, the module is not limited to the software or the hardware. The module may be arranged within a storage medium capable of addressing, or constructed to implement one or more processors. Accordingly, as an example, the module includes structural elements such as software structure elements, object-oriented software structure elements, class structure elements and task structure elements, processes, functions, attributes, procedures, subroutines, segments of program code, drivers, firmware, microcode, circuits, data, databases, data structures, tables, arrays, and parameters. The functions provided by the structural elements and the modules may be combined into fewer structural elements or modules or further separated into additional structural elements and modules.

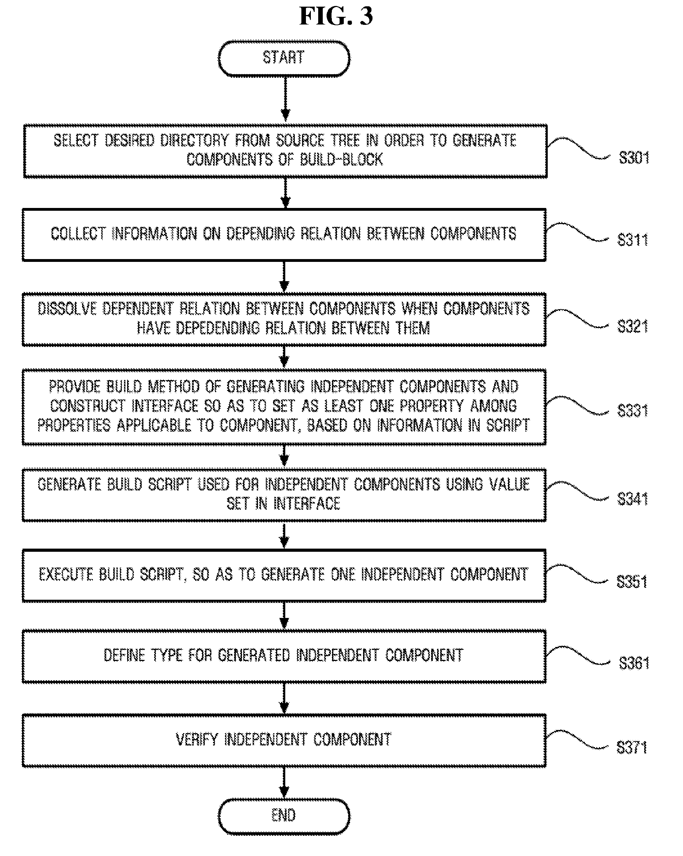

Hereinafter, a process for generating independent components will be described with reference to FIG. 3. FIG. 3 is a flowchart illustrating a process for making independent components according to an example embodiment of the present invention, such as the apparatus shown in FIG. 2.

First, the user selects a desired directory in a source tree to generate build-block components (operation S301). The build-block refers to a unit or block by which the components can be generated as independent components without the existence of depending relationships therebetween. The user may select an individual directory or a plurality of directory groups in the source tree in order to generate the independent components.

The collection unit 210 collects information on the depending relationships between the components (S311). Specifically, after one or more directories are selected to generate the independent components, the collection unit 210 can analyze whether depending relationships exists between the selected directories, and thereby collect information on the depending relationships between the components.

The removal unit 220 removes the depending relationships depending relationships exists between the components (operation S321). In order to remove the depending relationships between the components, the removal unit 220 may merge the components with the depending relation therebetween to generate a new independent component. Alternately, the removal unit 220 may copy the second component depending on the first component into the first component so that the second component is included in the first component, thereby dissolving the depending relationship.

The construction unit 230 provides a build method to generate independent components based on information in a script of, for example, the source tree, and an interface to set one or more properties that are applied to the independent components (operation S331). The interface may be classified into a build interface and a configuration interface, and may be displayed on a screen in the form of a GUI.

The generation unit 240 generates a build script for generating the independent components using a value set in the interface (operation S341). The value may be, for example, the build method provided by the construction unit 230.

The implementation unit 250 generates the components in which the depending relationships have been removed as one independent component (operation S351). To generate the independent component, the implementation unit 250 executes the build script generated by the generation unit 240.

The type definition unit 260 defines a type of the generated independent component (operation S361). The type can include or indicate information on the characteristics and functions of the independent component.

The verification unit 270 verifies whether the independent component is normally generated after the depending relationships are removed (operation S371).

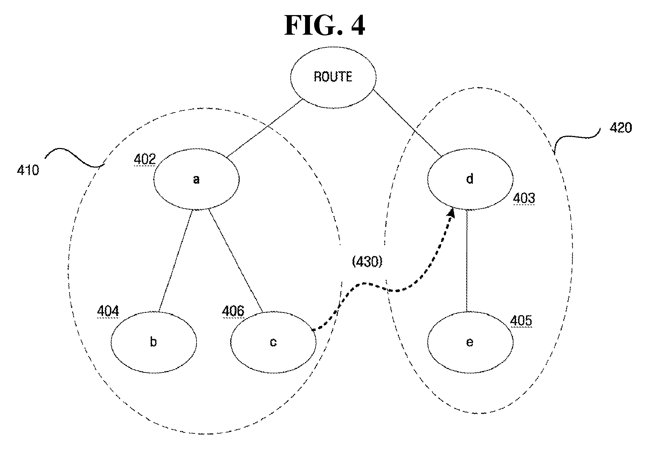

FIG. 4 is a conceptual view illustrating a process for selecting a directory to generate the independent components in a source tree according to an example embodiment of the present invention. Referring to FIG. 4, the user may select independent directories A-E 402, 404, 406, 403, and 405, or a plurality of directory groups 410 and 420 in the source tree in order to generate the independent components.

For example, it is assumed that the directories A 402, B 404, and C 406and the directories D 403 and E 405 are selected to generate the independent components. At this time, if the source file in directory C 406 refers to the source file in directory D 403 (430), then directory C 406 has a depending relationship with respect to directory D 403. Accordingly, the first component, to which directory C 406 belongs, and the second component, to which directory D 403 belongs, have a depending relationship with each other. In order to remove this depending relationship, the removal unit 220 can copy the source file in the directory D 403 into the first component, or merge the first component and the second component together.

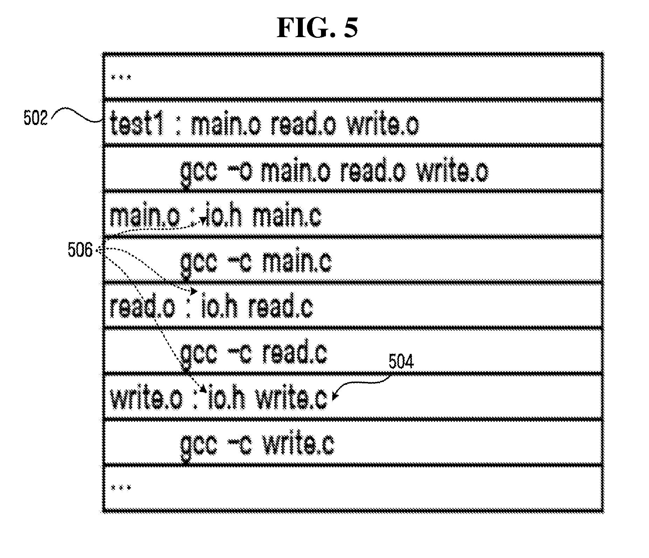

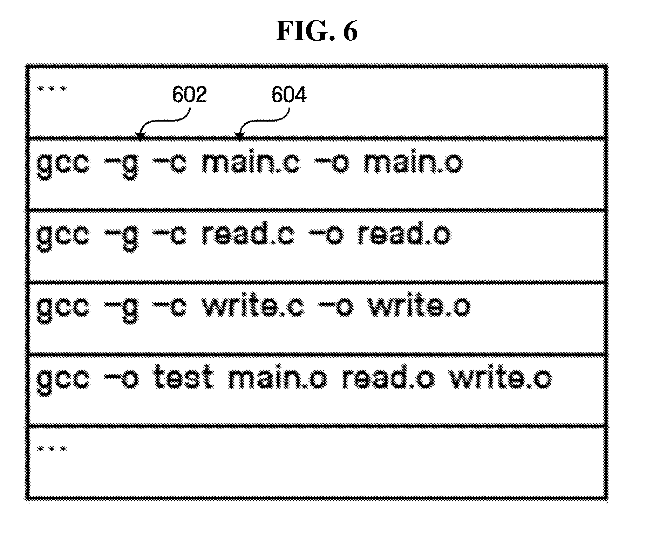

The collection unit 210 can collect information on the depending relationships by analyzing a script (for example, makefile of GNU) in the source tree. The analysis and collection of the collection unit 210 will be described in detail with reference to FIGS. 5 and 6.

FIGS. 5 and 6 show a script in the source tree and information during the execution of the script according to an example embodiment of the present invention. The collection unit 210 analyzes grammar and shell instructions written in the script in order to collect information on the depending relation between the components.

As shown in FIG. 5, test 1 502 indicates that, in the case where a write.c source file 504 is included in the second component, and the other files are included in the first component, the first component has a depending relationship with respect to the second component when the first component is generated. It is possible to collect information on the depending relationship between the components through information on a library required to link an interface (for example, io.h header file 506) including such first and second components, and a source file required to compile the library.

Further, the collection unit 210 executes the script, and then analyzes parameter values of the shell instructions to be transmitted to the compiler or the linker so as to collect information on the depending relationships between the directories. Accordingly, the collection unit 210 may change a name of the GCC compiler among the shell instructions in the script to another name, and copy the changed name. Further, the collection unit 210 may execute a program with the same name of GCC when the script is executed, and the GCC compiler is called. In other words, as shown in FIG. 6, when the script is executed and the GCC compiler in the shell instruction is called, the GCC program with the same name is executed to receive and analyze information (i.e. a compile option 602 which is a parameter value of the shell instruction and a name 604 of the source file to be compiled), which is substantially transmitted to the GCC compiler. Thus, the collection unit 210 can collect information on the depending relationships between the source files. The script of FIGs. 5 and 6 are presented as an example and may be constructed differently according to a system, but is not limited thereto.

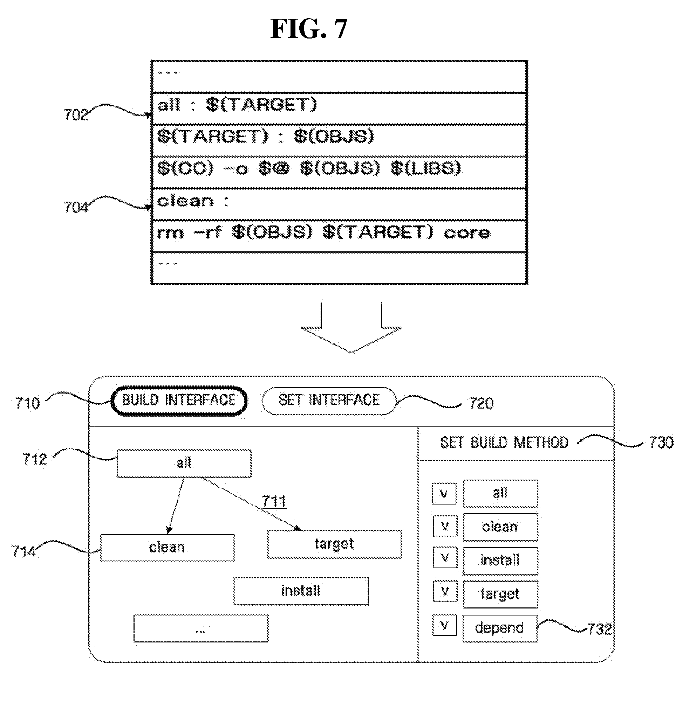

As described above, the removal unit 220 can remove the depending relationship by merging the components depending on one another together, or copying the source files depending on one another, based on the information on the depending relationship between the components. In addition, the construction unit 230 can configure an interface so as to set one or more properties that are applicable to the independent components, and the build method to generate the independent components based on information in the script. Hereinafter, a build interface will be described in detail with reference to FIG. 7.

FIG. 7 shows the build interface according to an example embodiment of the present invention. Referring to FIGS. 2 and 7, the construction unit 230 provides a build method to generate the independent components based on information in the script, and includes an interface to set one or more properties applicable to the independent component.

As shown in FIG. 7, the build methods include all 702, install, clean 704, etc. In a GNU coding standard, all 702 builds all targets (i.e. source files) of the source file package (directory), and install installs all targets. Furthermore, clean 704 is a build method for removing all targets and intermediate results. The build method of the script is provided to a user in the build interface 710 in the form of a GUI. Further, the build interface 710 may show a depending relationship 711 between the build methods. A setting menu 730 can be provided for the user to select the build method. Furthermore, the construction unit 230 can add an option 732 to the setting menu 730 of the build method so as to remove the depending relationships between the components. Thus, when the user selects the corresponding option 732, the removal unit 220 can remove the depending relationships between the components.

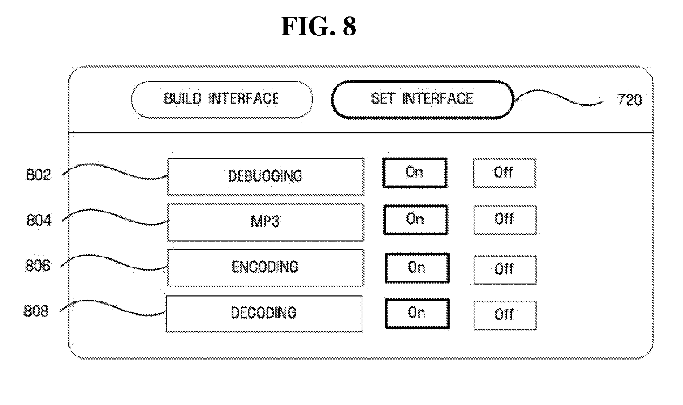

Further, the user can set properties applicable to the independent components through the configuration interface 720. Hereinafter, the setting of the properties will be described in detail with reference to FIG. 8.

FIG. 8 shows the configuration interface 720 (or set interface) according to an example embodiment of the present invention. The configuration interface 720 provides properties applicable to the independent components. For example, the user can enable or disable a debugging function 802 for the independent components. Furthermore, in the case of a component relating to an audio function, the user sets whether the independent component supports an MP3 804 format, or sets an encoding or decoding manner 806 or 808.

The generation unit 240 generates the build script used to generate the independent components using a value set in the built interface 710 and/or the configuration interface 720. The implementation unit 250 executes the build script so as to generate the independent components in which the depending relationship is removed. Specifically, in the case where an option 732 is selected from a setting menu 730 of the build method to remove the depending relationships between the components, the independent components can be generated without depending relationships when the build script is executed.

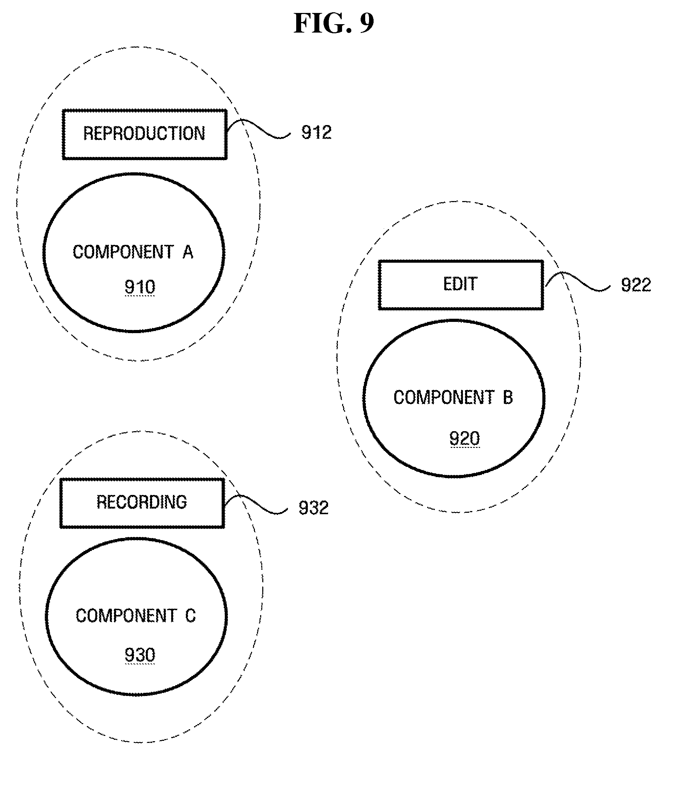

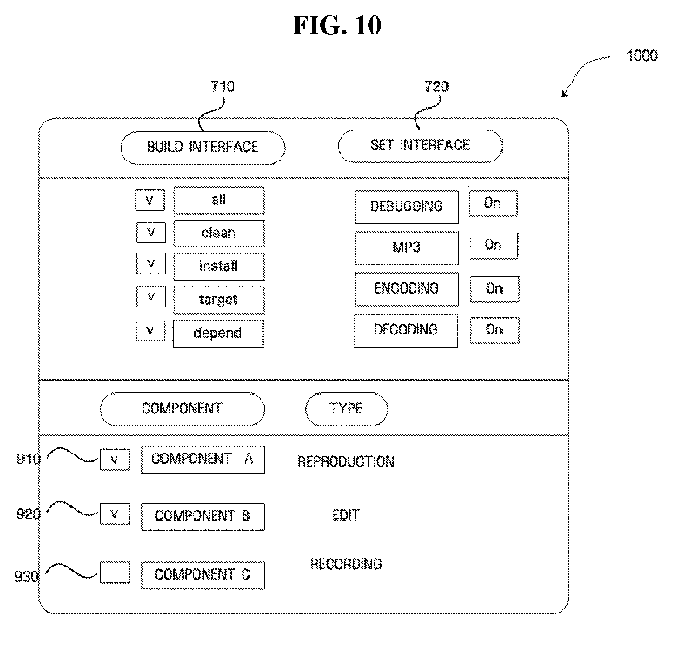

The type definition unit 260 defines the type for the built component, and will be described below with reference to FIGs. 9 and 10. FIGS. 9 and 10 show the independent components for which a type is defined, and a screen used to select components according to an example embodiment of the present invention.

The type definition unit 260 defines a type including or indicating information on characteristics and functions of the generated independent components 910, 920, and 930. As shown in FIG. 9, if the generated independent components 910, 920, and 930 are related to, for example, an audio function, the user distinguishes the independent components into types 912, 922, and 932 defined with relation to the independent components, and selects a desired independent component to carry out a desired function.

Therefore, as shown in FIG. 10, a GUI screen 1000 is provided so that the user can select the desired independent component. The GUI screen 1000 displays a build interface 710 set by the user as shown in FIGS. 7 and 8, and contents set in the configuration interface 720. The user can distinguish characteristics and functions of the independent components 910, 920, and 930 by the defined types (reproduction, edit, and recording). Hence, the user easily selects an independent component applicable to a system, and carries out a desired function.

As described above, the apparatus and method for generating build-block components according to aspects of the present invention have the following advantages. First, the components and functions therefor become more portable (i.e., the use of the components can be expanded widely) through the generation of the independent components. Second, a user can define a type of the independent component, and as a result, easily select and apply the desired component to a system.

Various components of the apparatus as shown in FIG. 2, such as the construction unit 230 and the generation unit 240 can be integrated into a single control unit, or alternatively, can be implemented in software or hardware, such as, for example, an application specific integrated circuit (ASIC). As such, it is intended that the processes described herein be broadly interpreted as being equivalently performed by software, hardware, or a combination thereof. As previously discussed, software modules can be written, via a variety of software languages, including C, C++, Java, Visual Basic, and many others. These software modules may include data and instructions which can also be stored on one or more machine-readable storage media, such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; and optical media such as compact discs (CDs) or digital video discs (DVDs). Instructions of the software routines or modules may also be loaded or transported into the wireless cards or any computing devices on the wireless network in one of many different ways. For example, code segments including instructions stored on floppy discs, CD or DVD media, a hard disk, or transported through a network interface card, modem, or other interface device may be loaded into the system and executed as corresponding software routines or modules. In the loading or transport process, data signals that are embodied as carrier waves (transmitted over telephone lines, network lines, wireless links, cables, and the like) may communicate the code segments, including instructions, to the network node or element. Such carrier waves may be in the form of electrical, optical, acoustical, electromagnetic, or other types of signals.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for generating build-block components that are independent components of a program executable to operate one or more hardware items, the apparatus comprising:
a removal unit (220) to remove one or more depending relationships between components so as to enable each of the components to be used independently of another when executing the program; and
an implementation unit (250) to generate one or more independent components from the components in which the one or more depending relationships have been removed.

2. The apparatus as claimed in claim 1, further comprising:
a type definition unit (260) to define a type indicating characteristics for the one or more independent components to enable a user to identify the one or more generated independent components.

3. The apparatus as claimed in claim 1, further comprising:
a collection unit (210) to collect information on the one or more depending relationships to enable the removal unit (220) to remove the one or more depending relationships.

4. The apparatus as claimed in claim 3, wherein the collection unit (210) collects the information on the one or more depending relationships by analyzing a script in a source tree.

5. The apparatus as claimed in claim 3, wherein the collection unit (210) collects the information on the one or more depending relationships by analyzing a parameter value to be transmitted to a compiler or a linker during execution of a script.

6. The apparatus as claimed in claim 1, further comprising:
a construction unit (230) to provide a build method for generating the one or more independent components.

7. The apparatus as claimed in claim 6, wherein the construction unit (230) comprises an interface to set at least one value corresponding to a selected build method and/or one or more properties applicable to the one or more independent components.

8. The apparatus as claimed in claim 7, further comprising a generation unit (240) to generate a build script used for generating the one or more independent components according to the at least one value set in the interface.

9. The apparatus as claimed in claim 7, wherein the interface comprises:
a build interface to provide the build method; and
a configuration interface to provide the one or more properties applicable to the one or more independent components.

10. The apparatus as claimed in claim 1, wherein the removal unit (220) removes the one or more depending relationships by copying a second component that depends on a first component into the first component.

11. The apparatus as claimed in claim 1, wherein the removal unit (220) removes the one or more depending relationships between a first component and a second component by merging the first component and the second component.

12. The apparatus as claimed in claim 1, wherein the one or more generated independent components comprise a directory or a plurality of directory groups that are selected by a user from a source tree.

13. The apparatus as claimed in claim 1, further comprising a verification unit (270) to verify whether the one or more independent components are normally generated.

14. An apparatus for distinguishing build-block components that are independent components of a program executable to operate one or more hardware items, the apparatus comprising:
an implementation unit (250) to generate one or more independent components; and
a type definition unit (260) to define a type indicating characteristics for the one or more independent components to enable a user to identify the one or more generated independent components.

15. The apparatus as claimed in claim 14, further comprising:
a removal unit (220) to remove one or more depending relationships between components so as to enable each of the components to be used independently of another when executing the program,
wherein the implementation unit (250) generates the one or more independent components from the components in which the one or more depending relationships have been removed.

16. A method of generating build-block components that are independent components of a program executable to operate one or more hardware items, the method comprising:
removing one or more depending relationships between components so as to enable each of the components to be used independently of another when executing the program; and
generating one or more independent components from the components in which the one or more depending relationships have been removed.

17. The method as claimed in claim 16, further comprising:
defining a type indicating characteristics for the one or more independent components to enable a user to identify the one or more generated independent components.

18. The method as claimed in claim 16, further comprising:
collecting information on the one or more depending relationships to enable the removing of the one or more depending relationships.

19. The method as claimed in claim 18, wherein the collecting of information on the one or more depending relationships comprises:
analyzing a script in a source tree.

20. The method as claimed in claim 18, wherein the collecting of information on the one or more depending relationships comprises:
analyzing a parameter value to be transmitted to a compiler or a linker during execution of a script.

21. The method as claimed in claim 16, further comprising:
providing a build method for generating the one or more independent components.

22. The method as claimed in claim 21, wherein the providing of the build method comprises:
constructing an interface to set at least one value corresponding to a selected build method and/or one or more properties applicable to the one or more independent components.

23. The method as claimed in claim 16, further comprising:
generating a build script used for generating the one or more independent components according to the at least one value set in the interface.

24. The method as claimed in claim 23, wherein the interface comprises:
a build interface to provide the build method; and
a configuration interface to provide the one or more properties applicable to the one or more independent components.

25. The method as claimed in claim 16, wherein the removing of the one or more depending relationships comprises:
copying a second component that depends on a first component into the first component.

26. The method as claimed in claim 16, wherein the removing of the one or more depending relationships comprises:
removing the one or more depending relationships between a first component and a second component by merging the first component and the second component.

27. The method as claimed in claim 16, wherein the one or more generated independent components comprise a directory or a plurality of directory groups that are selected by a user from a source tree.

28. The method as claimed in claim 16, further comprising:
verifying whether the one or more independent components are normally generated.
